(19) Europäisches Patentamt
European Patent Office
Office européen des brevets

(11) EP 2 169 024 B1

(12) **EUROPEAN PATENT SPECIFICATION**

(45) Date of publication and mention of the grant of the patent:
**28.08.2013 Bulletin 2013/35**

(51) Int Cl.:
***C09J 7/02*** *(2006.01)* ***C09J 133/06*** *(2006.01)*

(21) Application number: **09171154.9**

(22) Date of filing: **24.09.2009**

(54) **Pressure-sensitive adhesive sheet for optical member adhesion**

Druckempfindliche Klebefolie für Haftung optischer Elemente

Feuille adhésive sensible à la pression pour l’adhésion d’un élément optique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.09.2008 JP 2008247550**

(43) Date of publication of application:
**31.03.2010 Bulletin 2010/13**

(73) Proprietor: **NITTO DENKO CORPORATION**
**Ibaraki-shi, Osaka 567-8680 (JP)**

(72) Inventors:
- **Kishioka, Hiroaki**
  **Ibaraki-shi Osaka (JP)**
- **Kabutoya, Ryuuichi**
  **Ibaraki-shi Osaka (JP)**

(74) Representative: **Grünecker, Kinkeldey, Stockmair & Schwanhäusser**
**Leopoldstrasse 4**
**80802 München (DE)**

(56) References cited:
**EP-A1- 0 456 840**
**EP-A1- 0 539 995**
**EP-A1- 0 971 010**
**EP-A1- 1 275 706**
**EP-A1- 1 956 064**
**EP-A2- 2 033 998**
**US-A1- 2008 233 392**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a pressure-sensitive adhesive sheet for use in applications for optical member adhesion. More specifically, it relates to a pressure-sensitive adhesive sheet for optical member adhesion, which is excellent in thickness unevenness absorbability and durability even when the sheet is a thin film.

### BACKGROUND OF THE INVENTION

Recently, in various fields, display devices such as a liquid crystal display (LCD) and input devices such as a touch panel to be used in combination with the above display devices have been widely used. In the production of these display devices and input devices, a transparent pressure-sensitive adhesive sheet is used in applications for optical member adhesion. For example, a transparent double-sided pressure-sensitive adhesive sheet is used for adhering touch panels and various display devices or optical members (protective plate etc.) (see, e.g., Patent Documents 1 to 3).

EP-A1-1956064 describes adhesive compositions and sheets formed thereof for optical member adhesion and suggests compositions comprising an acrylic-based polymer obtained by copolymerizing at least a (meth)acrylic alkyl or alkoxyalkyl ester, an aromatic ring-containing monomer and a hydroxyl group-containing monomer, an isocyanate-based crosslinking agent, a silane coupling agent and a crosslinking accelerator. Examples of the accelerator include amino compounds, such as N,N,N',N'-tetramethylhexanediamine, triethylamine and imidazole, and organometallic compounds.

EP-A2-2033988 discloses pressure-sensitive adhesive sheets for optical member adhesion, which comprise at least an acrylic pressure-sensitive adhesive layer formed from a pressure-sensitive adhesive composition containing an acrylic polymer, wherein the acrylic polymer comprises 45 to 99.5 parts by weight of an alkoxyalkyl acrylate and 0.5 to 4.5 parts by weight of an acrylic monomer having a crosslinkable functional group, per total monomer components constituting the acrylic polymer. In one embodiment, the acrylic polymer has a weight-average molecular weight of 400,000 to 1,600,000 and the composition comprises 0.01 to 3.0 parts by weight of an aliphatic isocyanate crosslinking agent and 0.01 to 5.0 parts by weight of an amine compound containing two or more hydroxyl groups, per 100 parts by weight of the acrylic polymer. The composition comprises substantially no carboxyl group-containing monomers in the acrylic polymer.

Among the touch panels and the like, those containing members having thickness unevenness such as printed thickness unevenness and the like have increased. For example, in cell phones and the like, a touch panel having a member to which a flame-shaped printed part is applied is employed. In such applications, an ability to diminish the printed thickness unevenness, i.e., an excellent thickness unevenness absorbability is required for the pressure-sensitive adhesive sheet together with an ability to adhere and fix the member.

In order to enhance the thickness unevenness absorbability while maintaining adhesiveness, it is generally effective to increase the thickness of a pressure-sensitive adhesive layer. However, it has been recently required for the pressure-sensitive adhesive sheet to thin the sheet on the trend to lighter, thinner, and more compact products and thus it is required that the sheet is a thin film and also has the above-mentioned properties.

To the contrary, although it is also possible to enhance the thickness unevenness absorbability by using a conventional soft pressure-sensitive adhesive, there are problems that such an adhesive has a low pressure-sensitive adhesive force at high temperature and thus a decreased durability and hence lifting and the like at the thickness uneven part may occur. Namely, it is a current situation that a pressure-sensitive adhesive sheet which is thin and also excellent in thickness unevenness absorbability and durability.

Patent Document 1 : JP-A-2003-238915
Patent Document 2 : JP-A-2003-342542
Patent Document 3 : JP-A-2004-231723

### SUMMARY OF THE INVENTION

An object of the invention is to provide a pressure-sensitive adhesive sheet for optical member adhesion, which is excellent in thickness unevenness absorbability and durability even when the sheet is a thin film.

As a result of the intensive studies for achieving the above object, the present inventors have found that a pressure-sensitive adhesive sheet which is a thin film and is excellent in thickness unevenness absorbability and durability can be obtained by controlling storage modulus of an acrylic pressure-sensitive adhesive layer to a specific range and further by controlling peeling pressure-sensitive adhesive force against polyethylene terephthalate at 80°C to a specific range, thereby completing the invention. Moreover, they have found that a pressure-sensitive adhesive sheet which is

a thin film and is excellent in thickness unevenness absorbability and durability can be obtained by forming a pressure-sensitive adhesive layer from a pressure-sensitive adhesive composition containing an acrylic polymer which is composed of an alkoxyalkyl acrylate as a main monomer and has a specific molecular weight and a crosslinking agent, thereby completing the invention.

Namely, the present invention provides the items defined in claims 1 to 6.

Since the pressure-sensitive adhesive sheet for optical member adhesion of the invention has the constitution defined in the claims, the sheet is excellent in thickness unevenness absorbability and durability even when the sheet is a thin film (especially, even when the pressure-sensitive adhesive layer is a thin film). Therefore, in the case where the sheet is used for optical member adhesion, thickness unevenness such as printed thickness unevenness of a member is recovered, bubbles do not remain at the thickness uneven part, bubbles (foaming) and lifting do not occur even under an environment of high-temperature or high-temperature and high-humidity, and visibility of products (touch panels, display devices, etc.) is not inhibited at all. Moreover, products having a smooth surface and a beautiful finish are obtained. Furthermore, products obtained by adhering members using the pressure-sensitive adhesive sheet can be miniaturized and made thin.

## BRIEF DESCRIPTION OF THE DRAWINGS

FIG. 1 is a schematic cross-sectional view showing one embodiment of a resistance film-mode touch panel formed by adhering members with the pressure-sensitive adhesive sheet of the invention.

FIG. 2 is a schematic view of a PET film having a black printed layer (plan view from the black printed layer side) used for evaluation of thickness unevenness absorbability.

FIG. 3 is a schematic view (cross-sectional view) of a measuring sample used for evaluation of thickness unevenness absorbability.

Description of Reference Numerals and Signs

1 polyethylene terephthalate (PET) film on which a frame print is applied

- 1a PET film
- 1b frame print (thickness unevenness)

2 pressure-sensitive adhesive sheet of the invention

- 2a pressure-sensitive adhesive sheet of the invention
- 2b pressure-sensitive adhesive sheet of the invention

3 transparent conductive PET film
4 conductive layer
5 polycarbonate (PC) plate
6 PET film
7 black printed layer
8 pressure-sensitive adhesive sheet (acrylic pressure-sensitive adhesive layer)
9 PET film
10 glass substrate
11 thickness uneven part

## DETAILED DESCRIPTION OF THE INVENTION

The pressure-sensitive adhesive sheet for optical member adhesion of the invention (hereinafter sometimes simply referred to as "pressure-sensitive adhesive sheet of the invention") is a pressure-sensitive adhesive sheet for use in applications of adhering optical member(s). The pressure-sensitive adhesive sheet of the invention may be a double-sided pressure-sensitive adhesive sheet wherein both sides of the sheet are pressure-sensitive adhesive surfaces (pressure-sensitive adhesive layer surfaces) or may be a single-sided pressure-sensitive adhesive sheet wherein only one side of the sheet is a pressure-sensitive adhesive surface. In particular, from the viewpoint of adhering two members

each other, it is preferably a double-sided pressure-sensitive adhesive sheet. Incidentally, in the invention, the "pressure-sensitive adhesive sheet" includes tape-form one, i.e., a "pressure-sensitive adhesive tape".

The pressure-sensitive adhesive sheet of the invention is a pressure-sensitive adhesive sheet containing at least an acrylic pressure-sensitive adhesive layer having a storage modulus at 23 °C of from $1.0\times10^4$ Pa or more to less than $1.0\times10^5$ Pa and a peeling pressure-sensitive adhesive force (with respect to polyethylene terephthalate, 180° peeling) at 80°C of 2.5 N/20 mm or more (hereinafter sometimes referred to as "acrylic pressure-sensitive adhesive layer of the invention").

The pressure-sensitive adhesive sheet of the invention may be a so-called "substrate-less type" pressure-sensitive adhesive sheet having no substrate (substrate layer) (hereinafter sometimes referred to as "substrate-less pressure-sensitive adhesive sheet") or may be a substrate-attached type pressure-sensitive adhesive sheet. The above-mentioned substrate-less pressure-sensitive adhesive sheet may be a pressure-sensitive adhesive sheet composed only of the acrylic pressure-sensitive adhesive layer of the invention or may be a pressure-sensitive adhesive sheet having the acrylic pressure-sensitive adhesive layer of the invention and a pressure-sensitive adhesive layer other than the acrylic pressure-sensitive adhesive layer of the invention (hereinafter sometimes referred to as "other pressure-sensitive adhesive layer"). Moreover, the substrate-attached type pressure-sensitive adhesive sheet sufficiently has the acrylic pressure-sensitive adhesive layer of the invention at least on one side of the substrate. In particular, from the viewpoint of thinning the sheet, the substrate-less pressure-sensitive adhesive sheet (substrate-less double-sided pressure-sensitive adhesive sheet) is preferred, and more preferred is a substrate-less double-sided pressure-sensitive adhesive sheet composed only of the acrylic pressure-sensitive adhesive layer of the invention. In this regard, the above-mentioned "substrate (substrate layer)" does not include a release liner (separator) to be peeled off at the time when the pressure-sensitive adhesive sheet is used (at the time of adhesion).

Acrylic Pressure-Sensitive Adhesive Layer

The storage modulus at 23°C of the acrylic pressure-sensitive adhesive layer of the invention (hereinafter sometimes referred to as "storage modulus (23°C)") is from $1.0\times10^4$ Pa or more to less than $1.0\times10^5$ Pa. When the storage modulus (23°C) is less than $1.0\times10^4$ Pa, the acrylic pressure-sensitive adhesive layer is too soft and thus "paste run-off" (phenomenon that the pressure-sensitive adhesive layer is deformed and runs off from the edge of the members to be adhered at the time of adhesion) becomes remarkable. When the storage modulus (23°C) is $1.0\times10^5$ Pa or more, thickness unevenness absorbability is poor and thus foaming and lifting occur. Incidentally, the above-mentioned storage modulus is measured by laminating a plurality of the acrylic pressure-sensitive adhesive layers so as to be a thickness of about 1.5 mm and determining the modulus on Advanced Rheometric Expansion System (ARES) manufactured by Rheometric Scientific under the conditions of a frequency of 1 Hz in the range of -70 to 200°C at a temperature-elevating rate of 5°C/minute.

The storage modulus at 80°C of the acrylic pressure-sensitive adhesive layer of the invention (hereinafter sometimes referred to as "storage modulus (80°C)") is preferably from $1.0\times10^4$ Pa or more to less than $1.0\times10^5$ Pa. When the storage modulus (80°C) is less than $1.0\times10^4$ Pa, durability decreases in some cases. When the storage modulus (80°C) is $1.0\times10^5$ Pa or more, thickness unevenness absorbability is poor and thus foaming and lifting may occur in some cases.

In the pressure-sensitive adhesive sheet of the invention, the peeling pressure-sensitive adhesive force (with respect to polyethylene terephthalate, 180° peeling) at 80°C (sometimes referred to as "peeling pressure-sensitive adhesive force (vs PET, 80°C, 180° peeling)") of the surface of the acrylic pressure-sensitive adhesive layer of the invention is 2.5 N/20 mm or more (e.g., 2.5 to 20 N/20 mm), preferably 3.0 N/20 mm or more. When the peeling pressure-sensitive adhesive force (vs PET, 80°C, 180° peeling) is less than 2.5 N/20 mm, durability decreases. In this regard, the above-mentioned peeling pressure-sensitive adhesive force (vs PET, 80°C, 180° peeling) is measured by a 180° peeling test in which polyethylene terephthalate (PET) is used as an adherend. Specifically, in accordance with JIS Z 0237 and using "Lumirror T-50" manufactured by Toray Industries, Inc. as the adherend, the is measured by 180° peeling under the conditions of a drawing rate of 300 mm/minute after the surface of the acrylic pressure-sensitive adhesive layer of the invention of the pressure-sensitive adhesive sheet is adhered to the adherend. Incidentally, in the case of a double-sided pressure-sensitive adhesive sheet, the measurement can be conducted after a backing material ("Lumirror S-10" manufactured by Toray Industries, Inc., thickness of 25 μm) is adhered to the surface of the pressure-sensitive adhesive layer opposite to the measuring surface.

In the pressure-sensitive adhesive sheet of the invention, the peeling pressure-sensitive adhesive force (with respect to polycarbonate, 180° peeling) at 80°C (sometimes referred to as "peeling pressure-sensitive adhesive force (vs PC, 80°C, 180° peeling)") of the surface of the acrylic pressure-sensitive adhesive layer of the invention is preferably 2.5 N/20 mm or more (e.g., 2.5 to 20 N/20 mm), more preferably 3.0 N/20 mm or more. When the peeling pressure-sensitive adhesive force (vs PC, 80°C, 180° peeling) is less than 2.5 N/20 mm, foaming and peeling may sometimes occur in the case where the sheet is used under an environment of high-temperature or high-temperature and high-humidity. In this regard, the above-mentioned peeling pressure-sensitive adhesive force (vs PC, 80°C, 180° peeling) can be measured in a similar manner to the case of the aforementioned peeling pressure-sensitive adhesive force (vs PET, 80°C, 180° peeling) except that polycarbonate (PC) is used as the adherend.

By adjusting the storage modulus (23°C) and peeling pressure-sensitive adhesive force (vs PET, 80°C, 180° peeling) to the above specific ranges, the thickness unevenness absorbability of the pressure-sensitive adhesive sheet is enhanced since the acrylic pressure-sensitive adhesive layer is soft under room temperature conditions, as well as the durability of the pressure-sensitive adhesive sheet is enhanced since the pressure-sensitive adhesive force is not lowered even under relatively high-temperature conditions.

The thickness of the acrylic pressure-sensitive adhesive layer of the invention is not particularly limited but is preferably 10 to 200 μm, more preferably 10 to 75 μm, further preferably 10 to 55 μm, and most preferably 10 to 30 μm. When the thickness of the acrylic pressure-sensitive adhesive layer is less than 10 μm, a sufficient thickness unevenness absorbability may not be obtained. When the thickness exceeds 200 μm, the layer may not be effective for miniaturization and thinning of products such as touch panels manufactured using the pressure-sensitive adhesive sheet of the invention. Incidentally, the acrylic pressure-sensitive adhesive layer may have either form of a monolayer or a laminate.

A gel fraction of the acrylic pressure-sensitive adhesive layer of the invention is preferably 40 to 80% (% by weight), more preferably 50 to 70% from the viewpoint of a balance between durability and thickness unevenness absorbability. The gel fraction is determined as an ethyl acetate-insoluble content and specifically, is determined as a weight fraction (unit: % by weight) of the insoluble content after immersion in ethyl acetate at 23°C for 7 days relative to the sample before immersion. The gel fraction can be controlled by the amount of the crosslinking agent to be added, monomer composition of the acrylic polymer constituting the acrylic pressure-sensitive adhesive (e.g., content of the component B to be mentioned below), molecular weight of the acrylic polymer, and the like. When the gel fraction is less than 40%, durability becomes insufficient and lifting at the thickness uneven part may occur in some cases. When it exceeds 80%, thickness unevenness absorbability becomes insufficient in some cases.

The above-mentioned gel fraction (ratio of solvent-insoluble content) is specifically a value calculated by the following "measuring method of the gel fraction", for example.

(Measuring Method of Gel Fraction)

The acrylic pressure-sensitive adhesive layer: about 0.1 g was collected from the pressure-sensitive adhesive sheet of the invention. After the layer was wrapped in a porous tetrafluoroethylene sheet (product name "NTF 1122", manufactured by Nitto Denko Corporation) having an average pore diameter of 0.2 μm, it is tied with a kite string and the weight at that time is measured, the weight being regarded as weight before immersion. Incidentally, the weight before immersion is total weight of the acrylic pressure-sensitive adhesive layer (acrylic pressure-sensitive adhesive layer of the invention collected as above), the tetrafluoroethylene sheet, and the kite string. Moreover, total weight of the tetrafluoroethylene sheet and the kite string is also measured and regarded as tare weight.

Next, the above-mentioned material obtained by wrapping the acrylic pressure-sensitive adhesive layer in the tetrafluoroethylene sheet and tying it with the kite string (referred to as "a sample") is placed in a 50 ml vessel filled with ethyl acetate and allowed to stand at 23°C for 7 days. Thereafter, the sample is taken out of the vessel and transferred to an aluminum cup. After the sample was dried at 130°C for 2 hours in a drier to remove ethyl acetate, the weight thereof was measured, the weight being regarded as weight after immersion.

Then, the gel fraction is calculated according to the following formula:

$$\text{Gel Fraction (\% by weight)} = (A - B)/(C - B)\times 100 \quad (1)$$

(wherein A is weight after immersion, B is tare weight, and C is weight before immersion).

The acrylic pressure-sensitive adhesive layer of the invention preferably has a high transparency and, for example, total light transmittance in the visible light region (in accordance with JIS K 7361) is preferably 90% or more, more preferably 91% or more. Moreover, the haze value of the acrylic pressure-sensitive adhesive layer (in accordance with JIS K 7136) is, for example, preferably less than 1.0%, more preferably less than 0.8%. In this regard, the total light transmittance and the haze value can be measured with adhering the acrylic pressure-sensitive adhesive layer to a slide glass (e.g., one having a total light transmittance of 91.8% and a haze value of 0.4%) and by using a haze meter (product name "HM-150", manufactured by Murakami Color Research Laboratory Co., Ltd.).

The acrylic pressure-sensitive adhesive layer of the invention is composed of an acrylic pressure-sensitive adhesive and is not particularly limited so long as the storage modulus (23°C) and peeling pressure-sensitive adhesive force (vs PET, 80°C, 180° peeling) satisfy the above-mentioned ranges. As a specific constitution, there may be, for

example, mentioned an acrylic pressure-sensitive adhesive layer formed from a pressure-sensitive adhesive composition (acrylic pressure-sensitive adhesive composition) containing an acrylic polymer which is composed of an alkoxyalkyl acrylate and an acrylic monomer having a crosslinkable functional group to be mentioned below as essential monomer components and has a specific molecular weight, and a crosslinking agent.

One of specific constitutions of the acrylic pressure-sensitive adhesive layer of the invention is an acrylic pressure-sensitive adhesive layer formed from a pressure-sensitive adhesive composition containing an acrylic polymer and a crosslinking agent, in which the acrylic polymer contains an alkoxyalkyl acrylate (component A) and an acrylic monomer having a crosslinkable functional group (component B) as essential monomer components and has a weight-average molecular weight of 400,000 to 1,600,000, and in which the content of the component A is 20 to 99.5% by weight and the content of the component B is 0.5 to 4.5% by weight per total monomer components (100% by weight) constituting the acrylic polymer. Furthermore, a pressure-sensitive adhesive sheet also excellent in corrosion resistance against a metal (inclusive of a metal oxide), particularly against a metal thin film (inclusive of a metal oxide thin film), can be obtained when a carboxyl group-containing monomer is not substantially contained in the monomer components constituting the acrylic polymer.

The following will describe the acrylic pressure-sensitive adhesive layer having the above-mentioned specific constitution (acrylic pressure-sensitive adhesive layer formed from a pressure-sensitive adhesive composition containing an acrylic polymer which is composed of an alkoxyalkyl acrylate and an acrylic monomer having a crosslinkable functional group to be mentioned below as essential monomer components and has a specific molecular weight, and a crosslinking agent) in detail.

The pressure-sensitive adhesive composition forming the acrylic pressure-sensitive adhesive layer having the above-mentioned specific constitution is composed of an acrylic polymer and a crosslinking agent as essential components.

The acrylic polymer used in the above pressure-sensitive adhesive composition is a polymer composed of an acrylic acid alkoxyalkyl ester (an alkoxyalkyl acrylate) (hereinafter sometimes referred to as "component A") as an essential monomer component. In addition, the acrylic polymer further contains an acrylic monomer having a crosslinkable functional group (hereinafter sometimes referred to as "component B") as an essential monomer component for a copolymerization in addition to the above-mentioned monomer component. Moreover, other monomer components may be used according to need.

The above-mentioned alkoxyalkyl acrylate (component A) is not particularly limited but examples thereof include 2-methoxyethyl acrylate, 2-ethoxyethyl acrylate, methoxytriethylene glycol acrylate, 3-methoxypropyl acrylate, 3-ethoxypropyl acrylate, 4-methoxybutyl acrylate, and 4-ethoxybutyl acrylate. The component A can be used alone or in combination of two or more kinds thereof. Of these, from the viewpoints of copolymerization ability and coating ability (viscosity) of the pressure-sensitive adhesive composition, 2-methoxyethyl acrylate (2MEA) and 2-ethoxyethyl acrylate are preferred.

In the above-mentioned acrylic polymer, the monomer ratio of the component A is 20 to 99.5% by weight, preferably 45 to 99.5% by weight, and more preferably 50 to 80% by weight per 100 parts by weight of the total monomer components. When the content of the component A is less than 20% by weight in the total monomer components, adhesiveness becomes insufficient and a foaming/peeling preventive property (which means a property to inhibit occurrence of foaming and peeling (bubbles and lifting) at adhesion interface between the pressure-sensitive adhesive layer and a plastic (particularly, polycarbonate) under high-temperature conditions or under high-temperature and high-humidity conditions after the pressure-sensitive adhesive sheet is adhered to the plastic) becomes insufficient. On the other hand, when the content exceeds 99.5% by weight, since the content of the component B decreases, the formation of the crosslinking structure of the acrylic polymer becomes insufficient at the formation of the acrylic pressure-sensitive adhesive layer, the crosslinking rate is lowered, and the foaming/peeling preventive property becomes insufficient. Incidentally, the above mentioned monomer ratio means a ratio of each monomer charged (mixing ratio) at the production of the acrylic polymer. The other monomer ratio and monomer content also have the similar meanings.

As for the crosslinkable functional group in the above-mentioned acrylic monomer having a crosslinkable functional group (component B), there is no particular limitation so long as it is a functional group crosslinkable with a crosslinking agent to be mentioned below. Examples thereof include a carboxyl group, a glycidyl group, an amino group, an N-methylolamide group, and a hydroxyl group. Specifically, examples of the component B include glycidyl (meth) acrylate, glycidylmethyl (meth)acrylate as monomers having a glycidyl group; N,N-dimethylaminoethyl (meth)acrylate and N,N-diethylaminoethyl (meth)acrylate as monomers having an amino group; N-methylolacrylamide as monomers having an N-methylolamide group; and 2-hydroxyethyl (meth)acrylate, 3-hydroxypropyl (meth)acrylate, 4-hydroxybutyl (meth)acrylate, and 6-hydroxyhexyl (meth)acrylate as monomers having a hydroxyl group. Moreover, examples of the carboxyl group-containing monomer include acrylic acid (AA), methacrylic acid, itaconic acid, maleic acid, fumaric acid, and crotonic acid. Furthermore, acid anhydrides of these carboxyl group-containing monomers (e.g., acid anhydride group-containing monomers such as maleic anhydride and itaconic anhydride) are also included as the carboxyl group-containing monomers. Of these, preferred are monomers having an N-methylolamide group and acrylic monomers

having a hydroxyl group. Furthermore, acrylic monomers having a hydroxyl group are more preferred and 2-hydroxyethyl acrylate (2HEA), 4-hydroxybutyl acrylate (4HBA), 3-hydroxypropyl acrylate (3HPA), and 6-hydroxyhexyl acrylate (6HHA) are particularly preferred. In this regard, "(meth)acryl" means "acryl" and/or "methacryl". The same shall apply hereinafter.

In the above-mentioned acrylic polymer, the monomer ratio of the component B is 0.5 to 3.0% by weight, and preferably from 0.5 to 2.0% by weight per 100 parts by weight of the total monomer components. In the total monomer components, when the content of the component B is less than 0.5% by weight, the formation of the crosslinking structure of the acrylic polymer becomes insufficient at the formation of the acrylic pressure-sensitive adhesive layer, the peeling pressure-sensitive adhesive force (vs PET, 80°C, 180° peeling) decreases, and durability is lowered. Moreover, in the case where PC is used as an adherend, foaming tends to occur. On the other hand, when the content exceeds 4.5% by weight, the crosslinked structure becomes too dense and the storage modulus (23°C) becomes too high, so that the thickness unevenness absorbability decreases. Moreover, particularly in the case where PC is used as an adherend, peeling tends to occur.

In order to enhance the corrosion resistance of the pressure-sensitive adhesive sheet of the invention against a metal thin film, the monomer components constituting the acrylic polymer preferably contain substantially no monomer containing a carboxyl group (carboxyl group-containing monomer). Incidentally, the term "containing substantially no carboxyl group-containing monomer" means that the carboxyl group-containing monomer is not actively mixed except for the case of its unavoidable contamination. Specifically, the content thereof is less than 0.05% by weight, preferably less than 0.01% by weight, further preferably less than 0.001 % by weight. When the carboxyl group-containing monomer is contained, the corrosion resistance against a metal thin film decreases (e.g., conduction performance of an ITO (indium tin oxide) film or the like decreases) in some cases.

In the above-mentioned acrylic polymer, as for the other monomer components used other than the above-mentioned components A and B, there may be mentioned alkyl (meth)acrylate having a linear or branched alkyl group having 1 to 12 carbon atoms, for example, methyl (meth)acrylate, ethyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. In addition, there may be mentioned alkoxyalkyl methacrylates such as methoxyethyl methacrylate and ethoxyethyl methacrylate; cycloalkyl (meth)acrylate such as cyclohexyl (meth)acrylate; polyfunctional monomers such as triethylene glycol diacrylate, ethylene glycol dimethacrylate, and trimethylolpropane tri(meth)acrylate; vinyl acetate, styrene, and the like.

As the above-mentioned other monomer component, particularly from the viewpoints of suppressing the glass transition temperature (Tg) of the acrylic polymer to a low value and suppressing the storage modulus (23°C) thereof to a low value, a monomer having a Tg of 0°C or lower as its homopolymer is preferred, a monomer having a Tg of -40°C or lower is more preferred, and a monomer having a Tg of -50°C or lower is further preferred. For example, 2-ethylhexyl acrylate (2EHA), butyl acrylate (BA), and isooctyl acrylate (iOA) are preferred and 2-ethylhexyl acrylate (2EHA) and isooctyl acrylate (iOA) are more preferred.

In the above-mentioned acrylic polymer, the monomer ratio of the above-mentioned other monomer component (particularly, alkyl (meth)acrylate having a linear or branched alkyl group having 4 to 8 carbon atoms) is preferably 20 to 79% by weight, more preferably 30 to 70% by weight. When the content of the other monomer component in the total monomer components is less than 20% by weight, the thickness unevenness absorbability becomes poor in some cases. On the other hand, when the content exceeds 79% by weight, the foaming/peeling preventive property becomes poor in some cases.

The above-mentioned acrylic polymer can be prepared by polymerizing the above-mentioned monomer components using known or common polymerization methods. Examples of methods for polymerization to the acrylic polymer include a solution polymerization method, an emulsion polymerization method, a bulk polymerization method, and a polymerization method with ultraviolet irradiation. The solution polymerization method and UV polymerization method are preferred from the viewpoints of transparency, water resistance, costs, and the like, and the solution polymerization method is particularly preferred.

The polymerization initiator for use in solution polymerization of the acrylic polymer is not particularly limited, and can be suitably selected from the known or common ones. For example, there may be preferably exemplified oil-soluble polymerization initiators, e.g., azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis (cyclohexane-1-carbonitrile), 2,2'-azobis(2,4,4-trimethylpentane), and dimethyl-2,2'-azobis(2-methylpropionate); peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane; and the like. The polymerization initiators can be used alone or in combination of two or more kinds thereof. The amount of the polymerization initiator to be used may be an ordinary amount to be used. For example, the amount can be selected from the range of about 0.01 to 1 part by weight per 100 parts by weight of the total monomer components.

In the solution polymerization, various general solvents can be used. Examples of such solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone. The solvents can be used alone or in combination of two or more kinds thereof.

The weight-average molecular weight (hereinafter sometimes simply referred to as molecular weight) of the above-mentioned acrylic polymer is 400,000 to 1,600,000, preferably 600,000 to 1,200,000, and more preferably 600,000 to 1,000,000. When the weight-average molecular weight of the acrylic polymer is less than 400,000, the pressure-sensitive adhesive force and cohesive force required as the pressure-sensitive adhesives layer cannot be obtained and thus durability is poor. Also, the foaming/peeling preventive property becomes insufficient. On the other hand, when the weight-average molecular weight thereof exceeds 1,600,000, there arises a problem of poor coating ability and the like owing to an increase in the viscosity of the pressure-sensitive adhesive composition.

Incidentally, the above-mentioned weight-average molecular weight (Mw) is determined by gel permeation chromatography (GPC) method. More specifically, the weight-average molecular weight is obtained by the use of a product named "HLC-8120 GPC" (manufactured by Tosoh Corp.) as a GPC measuring apparatus under the following GPC measurement conditions according to a polystyrene equivalent.

GPC Measurement Conditions

Sample concentration: 0.2% by weight (tetrahydrofuran solution)
Sample injection amount: 10 μl
Eluent: tetrahydrofuran (THF)
Flow rate (speed): 0.6 mL/min
Column temperature (measuring temperature): 40°C
Column: product name "TSK gel Super HM-H/H4000/H3000/H2000" (manufactured by Tosoh Corp.)
Detector: differential refractometer (RI)

The weight-average molecular weight of the acrylic polymer can be controlled by the kinds and amounts of the polymerization initiator, and temperature and time during polymerization; and further controlled by a monomer concentration, a monomer dropping rate, and the like.

The glass transition temperature (Tg) of the above-mentioned acrylic polymer is preferably -40 to -70°C and more preferably -50 to -70°C from the viewpoints of controlling the storage modulus (23°C) to the above-mentioned range and enhancing the pressure-sensitive adhesive properties at low temperature and properties at high speed (e.g., a property of causing no peeling at the time when an adhered assembly is dropped (dropping impact property)). Incidentally, Tg of the above-mentioned acrylic polymer is the glass transition temperature (theoretical value) shown in the following formula.

$$1/Tg = W_1/Tg_1 + W_2/Tg_2 + ... + W_n/Tg_n$$

In the above formula, Tg means the glass transition temperature of the acrylic polymer (unit: K), $Tg_i$ means the glass transition temperature of the homopolymer of monomer i (unit: K), and $W_i$ means a weight fraction of the monomer i in the total monomer components (i is any of integers selected from 1 to n). In this regard, the above is a calculation formula in the case where the acrylic polymer is composed of n kinds of monomer components of a monomer 1 to a monomer n.

As the crosslinking agent for use in the above-mentioned pressure-sensitive adhesive composition, a wide variety of conventionally known crosslinking agents can be used and the crosslinking agent can be suitably selected from polyfunctional melamine compounds, polyfunctional epoxy compounds, and polyfunctional isocyanate compounds according to the functional group of the component B. The crosslinking agents can be used alone or as a mixture of two or more kinds thereof. In the invention, by using a crosslinking agent, the acrylic polymer is transformed into a crosslinked structure during the formation of the acrylic pressure-sensitive adhesive layer to thereby enhance the durability of the pressure-sensitive adhesive sheet and also the foaming/peeling preventive property is balanced.

Examples of the above-mentioned polyfunctional melamine compounds include methylated trimethylolmelamine and butylated hexamethylolmelamine. Examples of the polyfunctional epoxy compounds include diglycidylaniline, and glycerol diglycidyl ether. Furthermore, examples of the polyfunctional isocyanate compounds include tolylene diisocyanate (TDI), hexamethylene diisocyanate (HDI), polymethylenepolyphenyl isocyanate, diphenylmethane diisocyanate, products of the reaction of trimethylolpropane with tolylene diisocyanate, products of the reaction of trimethylolpropane with hexamethylene diisocyanate, polyether polyisocyanates, and polyester polyisocyanates. Of these, it is preferred to use a monomer containing a hydroxyl group as the component B and a polyfunctional isocyanate compound (isocyanate crosslinking agent) as the crosslinking agent.

Incidentally, there is a case where yellowing suppression of the pressure-sensitive adhesive layer is strictly required depending on the applications of the pressure-sensitive adhesive sheet. For example, in the case where an aromatic isocyanate compound is used as a crosslinking agent, yellowing becomes a problem and thus some countermeasures should be taken in some cases. In such a case, particularly from the viewpoint of enhancing yellowing resistance (yellowing inhibiting property), it is preferred to use an aliphatic isocyanate crosslinking agent as a crosslinking agent among the above-mentioned compounds. As the aliphatic isocyanate crosslinking agents, conventionally known one can be widely used and preferable examples thereof include 1,6-hexamethylene diisocyanate, 1,4-tetramethylene diisocyanate, 2-methyl-1,5-pentane diisocyanate, 3-methyl-1,5-pentane diisocyanate, lysine diisocyanate, isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylylene diisocyanate. Of these, it is preferred to use a monomer having a hydroxyl group as the component B and hexamethylene diisocyanate (1,6-hexamethylene diisocyanate) (inclusive of a reaction product using HDI) as the crosslinking agent.

The amount of the above-mentioned crosslinking agent to be used is not particularly limited. For example, the preferred amount thereof is generally 0.01 to 5.0 parts by weight, more preferably 0.01 to 3.0 parts by weight, further preferably 0.1 to 3.0 parts by weight, and most preferably 0.1 to 1.0 part by weight per 100 parts by weight of the acrylic polymer. Of these, from the viewpoint of enhancing the yellowing resistance of the pressure-sensitive adhesive layer, the amount of the aliphatic isocyanate crosslinking agent to be used is preferably 0.01 to 3.0 parts by weight, more preferably 0.1 to 3.0 parts by weight, and most preferably 0.1 to 1.0 part by weight per 100 parts by weight of the acrylic polymer.

As mentioned above, in the case of using the aliphatic isocyanate crosslinking agent for suppressing yellowing, the crosslinking rate becomes very low and thus a problem in productivity sometimes occurs. In a general pressure-sensitive adhesive sheet, although it may be possible to accelerate the crosslinking reaction by heating, in the applications where a strict requirement for appearance is present, the method of accelerating the crosslinking by heating, which tends to cause and promote bruises, is difficult to use in some cases. In such cases, for accelerating the crosslinking reaction, it is possible to use an amine compound containing a plurality of hydroxyl groups as a crosslinking accelerator in the above-mentioned pressure-sensitive adhesive composition. In the case of using an aliphatic isocyanate crosslinking agent as a crosslinking agent, from the viewpoint of maintaining the productivity (particularly, rapid progress of the crosslinking reaction without crosslinking acceleration by heating), the amine compound is particularly preferably used in combination. As for the amine compound containing a plurality of hydroxyl groups, there is no particular limitation so long as it is an amine compound having at least two hydroxyl groups (alcoholic hydroxyl groups) in the molecule. Moreover, in the amine compound, the number of the nitrogen atom is not particularly limited. The above-mentioned amine compound containing a plurality of hydroxyl groups can be used alone or in combination of two or more kinds thereof.

As for the amine compound containing a plurality of hydroxyl groups, specifically, examples of amine compounds containing one nitrogen atom in the molecule include dialcoholamines such as diethanolamine, dipropanolamine, diisopropanolamine, N-methyldiethanolamine, N-methyldiisopropanolamine, N-ethyldiethanolamine, N-ethyldiisopropanolamine, N-butyldiethanolamine, and N-butyldiisopropanolamine; and trialcoholamines such as triethanolamine, tripropanolamine, and triisopropanolamine.

Moreover, examples of amine compounds containing two nitrogen atoms in the molecule include amine compounds represented by the following formula (I).

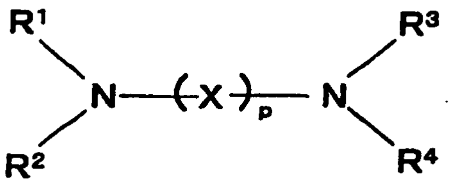

(I)

In the formula (I), $R^1$, $R^2$, $R^3$, $R^4$ are the same or different and each represents a hydrogen atom or $[-(R^5O)_m(R^6O)_n-H]$, in which $R^5$ and $R^6$ are different from each other and each represents an alkylene group; m and n are an integer of 0 or more but are not 0 at the same time; at least two of $R^1$, $R^2$, $R^3$, and $R^4$ are $[-(R^{5O})_m(R^6O)_n-H]$; and X represents a divalent hydrocarbon group and p is an integer of 1 or more.

In the above-mentioned formula (I), examples of the alkylene group of $R^5$ and $R^6$ include alkylene groups having about 1 to 6 carbon atoms such as methylene, ethylene, propylene, trimethylene, tetramethylene, ethylethylene, pentamethylene, and hexamethylene groups, preferably alkylene groups having 1 to 4 carbon atoms, and further preferably alkylene groups having 2 or 3 carbon atoms. The alkylene group may have either form of a linear chain or a branched chain. Of these, as alkylene groups of $R^5$ and $R^6$, an ethylene group or a propylene group can be suitably used.

Moreover, m and n are not particularly limited so long as they are an integer of 0 or more but at least one of m and n can be selected from the range of 0 to 20, preferably about 1 to 10. As for m and n, either one is 0 but another is an integer of 1 or more (especially 1) in many cases. Incidentally, m and n are not 0 at the same time (in the case where m and n are 0 at the same time, $[-(R^5O)_m(R^6O)_n-H]$ represents a hydrogen atom).

Furthermore, X represents a divalent hydrocarbon group. Examples of the divalent hydrocarbon group include alkylene groups, cycloalkylene groups, and arylene groups. The alkylene group of X may be either a linear chain or a branched chain. Moreover, X may be either saturated or unsaturated. Examples of the alkylene group of X include alkylene groups having 1 to about 6 carbon atoms such as methylene, ethylene, propylene, trimethylene, and tetramethylene groups, preferably alkylene groups having 1 to 4 carbon atoms, further preferably alkylene groups having 2 or 3 carbon atoms. Moreover, examples of the cycloalkylene group include about 5 to 12-membered cycloalkylene groups such as a 1,2-cyclohexylene group, a 1,3-cyclohexylene group, and a 1,4-cyclohexylene group. As the arylene group, a 1,2-phenylene group, a 1,3-phenylene group, and a 1,4-phenylene group can be used.

Moreover, p is not particularly limited so long as it is an integer of 1 or more. For example, p can be selected from the range of about 1 to 10 and is preferably an integer of 1 to 6, further preferably an integer of 1 to 4.

More specifically, examples of the amine compound represented by the above-mentioned formula (I) include N,N,N',N'-tetrakis(2-hydroxyethyl)ethylenediamine, N,N,N',N'-tetrakis(2-hydroxypropyl)ethylenediamine, N,N,N',N'-tetrakis(2-hydroxyethyl)trimethylenediamine, and N,N,N',N'-tetrakis(2-hydroxypropyl)trimethylenediamine, and also polyoxyethylene condensates of ethylenediamine, polyoxypropylene condensates of ethylenediamine, and polyoxyethylene-polyoxypropylene condensates of ethylenediamine. As for such amine compounds, for example, commercially available products such as product names "EDP-300", "EDP-450", "EDP-1100", and "Pluronic" (all manufactured by ADEKA Corporation) can be also utilized.

The amount of the amine compound containing a plurality of hydroxyl groups to be used is, for example, preferably 0.01 to 5.0 parts by weight, more preferably 0.05 to 1.0 part by weight per 100 parts by weight of an acrylic polymer, from the viewpoint of accelerating the crosslinking reaction to improve the productivity.

In the above-mentioned pressure-sensitive adhesive composition, in order to accelerate the crosslinking reaction, a crosslinking accelerator other than those mentioned above can be employed. As such a crosslinking accelerator, there may be mentioned amine compounds such as N,N,N',N'-tetramethylhexanediamine and imidazole, amine compounds having a plurality of reactive functional groups other than a hydroxyl group, and organometallic compounds such as cobalt naphthenate, dibutyltin diacetate, dibutyltin hydroxide, and dibutyltin laurate. They can be used alone or in combination of two or more kinds thereof. The amount of the above-mentioned crosslinking accelerator to be used is, for example, usually preferably 0.001 to 0.5 part by weight, more preferably 0.001 to 0.3 part by weight per 100 parts by weight of the acrylic polymer.

According to need, the pressure-sensitive adhesive composition may further contain general additives such as ultraviolet absorbers, light stabilizers, aging inhibitors, releasability regulators, tackifiers, plasticizers, softeners, fillers, colorants (pigments, dyes, etc.), and surfactants.

The above-mentioned pressure-sensitive adhesive composition can be prepared by mixing the acrylic polymer with a crosslinking agent and further with a crosslinking accelerator and other additives according to need.

The pressure-sensitive adhesive layer having the above-mentioned specific constitution can be obtained by applying (coating) the above-mentioned pressure-sensitive adhesive composition onto a substrate or a release liner and drying and/or curing the composition according to need to form an acrylic pressure-sensitive adhesive layer. Particularly, the substrate-less double-sided pressure-sensitive adhesive sheet composed of the acrylic pressure-sensitive adhesive layer alone is obtained by applying the above-mentioned pressure-sensitive adhesive composition onto a release liner.

Incidentally, for the application of the pressure-sensitive adhesive composition, it is possible to use known coating methods, and a coater in common use can be used, for example, a gravure roll coater, reverse-roll coater, kiss-roll coater, dip-roll coater, bar coater, knife coater, and spray coater.

## Pressure-Sensitive Adhesive Sheet for Optical Member Adhesion

The pressure-sensitive adhesive sheet of the invention is a pressure-sensitive adhesive sheet having at least the above-mentioned acrylic pressure-sensitive adhesive layer of the invention. As for specific constitutions of the pressure-sensitive adhesive sheet of the invention, examples thereof include (1) a substrate-less double-sided pressure-sensitive adhesive sheet composed only of the acrylic pressure-sensitive adhesive layer of the invention, (2) a substrate-less double-sided pressure-sensitive adhesive sheet having the acrylic pressure-sensitive adhesive layer of the invention and another pressure-sensitive adhesive layer, (3) a double-sided pressure-sensitive adhesive sheet having the acrylic pressure-sensitive adhesive layers of the invention on both sides of a substrate, (4) a double-sided pressure-sensitive

adhesive sheet having the acrylic pressure-sensitive adhesive layer of the invention on one side of a substrate and another pressure-sensitive adhesive layer on the opposite side, and (5) a single-sided pressure-sensitive adhesive sheet having the acrylic pressure-sensitive adhesive layer of the invention on one side of a substrate. Of these, the substrate-less double-sided pressure-sensitive adhesive sheet (1) composed only of the acrylic pressure-sensitive adhesive layer of the invention is preferably used.

According to the pressure-sensitive adhesive sheet of the invention, since the acrylic pressure-sensitive adhesive layer of the invention exhibits both of excellent thickness unevenness absorbability and durability, it is preferred to use it on the side of the adherend having thickness unevenness.

(Substrate)

In the case where the pressure-sensitive adhesive sheet of the invention has a substrate, the substrate is not particularly limited but examples thereof include various optical films such as plastic films, antireflection (AR) films, polarizing plates, and retardation plates. Examples of materials of the plastic films and the like include plastic materials such as polyester resins, e.g., polyethylene terephthalate (PET); acrylic resins, e.g., polymethyl methacrylate (PMMA); polycarbonate resins; triacetylcellulose; polysulfones; polyarylates; and cycloolefin polymers, e.g., a product name "Arton" (cycloolefin polymer; manufactured by JSR Co., Ltd.) and a product name "Zeonor" (cycloolefin polymer; manufactured by Nippon Zeon Co., Ltd.). Such plastic materials can be used alone or in combination of two or more kinds thereof. Moreover, the above-mentioned "substrate" is a part which is adhered to the adherend together with the pressure-sensitive adhesive layer at the time of use (adhesion) of the pressure-sensitive adhesive sheet to adherends (optical members etc.). The release liner (separator) to be peeled off at the time of using (adhering) the pressure-sensitive adhesive sheet is not included in the "substrate".

Among the above, the substrate is preferably a transparent substrate. The "transparent substrate" is, for example, preferably a substrate having a total light transmittance as measured in the visible light wavelength region (in accordance with JIS K 7361) of 85% or higher, and more preferably a substrate having a total light transmittance of 90% or higher. Moreover, as the above transparent substrate, there may be mentioned non-oriented films such as PET films, a product name "Arton" and a product name "Zeonor".

The thickness of the above-mentioned substrate is not particularly limited and, for example, it is preferably 25 to 50 $\mu$m. In this regard, the substrate may have either a single-layer constitution or a multilayer constitution. The surfaces of the substrate may have undergone an appropriate surface treatment which is known or in common use, e.g., a physical treatment such as corona discharge treatment or plasma treatment or a chemical treatment such as undercoating.

(Other Pressure-Sensitive Adhesive Layer)

In the case where the pressure-sensitive adhesive sheet of the invention has another pressure-sensitive adhesive layer, such an another pressure-sensitive adhesive layer is not particularly limited and examples thereof include known and commonly used pressure-sensitive adhesive layers formed from known pressure-sensitive adhesives such as urethane pressure-sensitive adhesives, acrylic pressure-sensitive adhesives, rubber pressure-sensitive adhesives, silicone pressure-sensitive adhesives, polyester pressure-sensitive adhesives, polyamide pressure-sensitive adhesives, epoxy pressure-sensitive adhesives, vinyl alkyl ether pressure-sensitive adhesives, and fluorine pressure-sensitive adhesives. The above-mentioned pressure-sensitive adhesives can be used solely or in combination of two or more kinds thereof. Such an another pressure-sensitive adhesive layer may be an acrylic pressure-sensitive adhesive layer other than the acrylic pressure-sensitive adhesive layer of the invention.

(Release Liner)

The surface of the pressure-sensitive adhesive layer (pressure-sensitive adhesive surface) of the invention may be protected with a release liner (separator) before the time of use. The release liner is used as a protective material of the pressure-sensitive adhesive layer and is peeled off at the time of adhesion to adherends (optical members etc.). Moreover, when the pressure-sensitive adhesive sheet is a substrate-less pressure-sensitive adhesive sheet, the release liner also plays a role of a support of the pressure-sensitive adhesive layer. The release liner may be not necessarily provided. As the release liner, a release paper in common use and the like can be used and the liner is not particularly limited. For example, there can be used a substrate having a releasant-treated layer, e.g., a plastic film or paper whose surface is treated with a releasant such as a silicone type, long-chain alkyl type, fluorine type one, or molybdenum sulfide; a substrate having low adhesiveness, which is composed of a fluorine polymer such as polytetrafluoroethylene, polychlorotrifluoroethylene, polyvinyl fluoride, polyvinylidene fluoride, a tetrafluoroethylene-hexafluoropropylene copolymer, or a chlorofluoroethylene-vinylidene fluoride copolymer; a substrate having low adhesiveness, which is composed of a non-polar polymer, e.g., an olefin resin such as polyethylene or polypropylene; and the like. Incidentally, the release

liner can be formed by known and conventional methods. Moreover, the thickness of the release liner is not particularly limited.

The pressure-sensitive adhesive sheet of the invention exhibits an excellent thickness unevenness absorbability at the time of adhesion to adherends since the storage modulus (23°C) of the acrylic pressure-sensitive adhesive layer is low at some degree. Incidentally, the term "thickness unevenness absorbability" means that the pressure-sensitive adhesive layer of the pressure-sensitive adhesive sheet for use in adhesion is transformed according to the shape of the thickness unevenness even when the surface of the adherend has thickness unevenness and thus bubbles (foaming) and thus lifting do not occur at the thickness uneven part. Furthermore, since the pressure-sensitive adhesive sheet of the invention has a high peeling pressure-sensitive adhesive force (vs PET, 80°C, 180° peeling), it is also excellent in durability. Incidentally, the term "durability" means that poor adhesion reliability such as occurrence of foaming and lifting does not occur at the thickness uneven part through change with time and/or high-temperature conditions after adhesion.

In the conventional pressure-sensitive adhesive (pressure-sensitive adhesive layer), in order to lower the storage modulus (23°C), it is common to adopt composition in which the glass transition temperature (Tg) of the polymer constituting the pressure-sensitive adhesive layer is low and the introduction of polar groups is in a small amount. However, since such a pressure-sensitive adhesive layer has a low storage modulus under high temperature and interaction with the adherend at the interface is small, the peeling pressure-sensitive adhesive force (vs PET, 80°C, 180° peeling) is low, so that "lifting" and the like tend to occur under high-temperature conditions and with the passage of time and durability is poor. On the other hand, when the glass transition temperature (Tg) of the pressure-sensitive adhesive layer is elevated for enhancing the peeling pressure-sensitive adhesive force (vs PET, 80°C, 180° peeling), the storage modulus (23°C) is also increased, so that the thickness unevenness absorbability decreases and thus the thickness unevenness cannot be entirely recovered. In the invention, both of the thickness unevenness absorbability and durability are successfully achieved by designing the peeling pressure-sensitive adhesive force (vs PET, 80°C, 180° peeling) to a high level while the storage modulus (23°C) is kept low at some degree.

In the acrylic pressure-sensitive adhesive layer having the above-mentioned specific constitution, since the acrylic polymer constituting the pressure-sensitive adhesive layer is composed of an alkoxyalkyl acrylate (component A) as an essential monomer constituent, Tg of the polymer becomes relatively low. On the other hand, since an appropriate intertwisting of molecular chains occurs when the acrylic polymer is transformed into a high-molecular-weight one through crosslinking owing to the effect of the alkoxy group (alkoxyl group) and the control of the acrylic polymer to have a specific molecular weight, a high pressure-sensitive adhesive force can be exhibited even under high temperature and also the storage modulus of the acrylic pressure-sensitive adhesive layer does not decrease even under high temperature. Therefore, the pressure-sensitive adhesive force and storage modulus under high temperature can be kept high even when Tg is relatively low and molecular weight is low, so that both of the thickness unevenness absorbability and durability can be achieved. In addition, while the applicability and adhesiveness at low temperature and at high speed are satisfied, the foaming/peeling preventive property under high temperature can be enhanced.

Furthermore, since the acrylic polymer constituting the pressure-sensitive adhesive composition contains a specific amount of the monomer having a crosslinkable functional group such as a hydroxyl group (component B) and has been crosslinked with a crosslinking agent to form a pressure-sensitive adhesive layer, it is possible for the acrylic pressure-sensitive adhesive layer to have an appropriate crosslinking degree and thereby the durability can be enhanced. In addition, an effect of prevention of foaming and peeling under high temperature is exhibited.

Moreover, in the case where a carboxyl group-containing monomer is not contained as a monomer constituting the above-mentioned acrylic polymer, an increase in resistance value of a metal thin film (inclusive of a metal oxide thin film) such as ITO (corrosion of metal thin film), which may occur resulting from the acid component, does not occur, so that the polymer can be suitably used in the applications where an ITO film is laminated. Although the mechanism of the increase in resistance value is not clear, it is presumed that the carboxyl group-containing monomer remaining as a monomer during the polymerization and a low-molecular-weight polymer capable of dissolution into water invade into the ITO film by the action of water under high-temperature high-humidity conditions to thereby inhibit conduction.

In addition, in the case where an aliphatic isocyanate crosslinking agent is used as a crosslinking agent and an amine compound containing a plurality of hydroxyl groups is also added, a pressure-sensitive adhesive sheet having improved yellowing resistance, productivity, and appearance can be formed.

On the other hand, in a conventional pressure-sensitive adhesive layer formed from an acrylic polymer constituted of monomer components containing an alkyl (meth)acrylate as a main component and containing no alkoxyalkyl acrylate, the pressure-sensitive adhesive force and storage modulus under high temperature tend to decrease. In the case where the storage modulus (23°C) is relatively low, durability cannot be achieved. Also, the layer has a problem that the foaming/peeling preventive property under a high-temperature and high-humidity environment decreases. With respect to the problem, in order to improve the property, elevation of the glass transition temperature (Tg) of the pressure-sensitive adhesive layer has been performed by copolymerization with a monomer which may result in high glass transition temperature (Tg) when its homopolymer is formed or copolymerization with a functional group-containing monomer (e.g., a carboxyl group-containing monomer such as acrylic acid) or by addition of an oligomer (low-molecular-weight polymer). However, when Tg of the pressure-sensitive adhesive layer is elevated, the storage modulus in the room temperature region is also increased and the thickness unevenness absorbability cannot be satisfied. Furthermore, particularly in the case where a carboxyl group-containing monomer such as acrylic acid is used as a monomer component for the above-mentioned purpose or for enhancing adhesiveness and storage modulus, corrosion resistance decreases in the case where a metal thin film (inclusive of a metal oxide thin film) is used as an adherend.

The pressure-sensitive adhesive sheet of the invention is used in the applications of adhering optical member (s) (for optical member adhesion). The above-mentioned optical members include members having an optical property (e.g., a polarizing property, a photorefractive property, a light scattering property, a light reflective property, a light transmitting property, a light absorbing property, a light diffracting property, an optical rotatory property, a visible property, etc.). The optical member is not particularly limited so long as it is a member having an optical property. For example, there may be mentioned members constituting devices such as display devices (image display devices) and input devices or members for use in these devices. Examples thereof include polarizing plates, wavelength plates, retardation plates, optical compensation films, luminance enhancing films, optical wave guides, reflection films, antireflection films, transparent conductive films (ITO film etc.), design films, decorative films, surface protective films, prisms, color filters, transparent substrates, and also members obtained by lamination thereof. In this regard, the above-mentioned "plate" and "film" also include plate-like, film-like, sheet-like, or the like form. For example, the "polarizing plate" also includes a "polarizing film" and a "polarizing sheet".

Examples of the above-mentioned display devices include liquid display devices, organic EL (electroluminescence) display devices, PDP (plasma display panel), and electronic papers. Moreover, examples of the above-mentioned input devices include touch panels.

Among the above, particularly, the pressure-sensitive adhesive sheet of the invention is preferably used in the applications for adhering a member constituting a touch panel or a member for use in a touch panel (for touch panel member adhesion). More specifically, the sheet is preferably used for adhering a member for protecting or decorating a touch panel, such as a surface protective film, design film, or decorative film for a touch panel. Furthermore, the sheet is also preferably used in the applications for adhering a touch panel itself to a display device (e.g., a liquid crystal display device).

The above-mentioned optical member (e.g., the touch panel member) is not particularly limited but examples thereof include members composed of acrylic resins, polycarbonate, polyethylene terephthalate, glass, metal thin films, or the like (e.g., sheet-like, film-like, or plate-like members). Incidentally, the "optical members" in the invention also include members playing a role of decoration or protection while a visible property of the display device or input device as an adherend is maintained (design films, decorative films, surface protective films, etc.) as mentioned above.

The embodiment of adhesion of the optical member(s) with the pressure-sensitive adhesive sheet of the invention is not particularly limited but may be (1) an embodiment of adhering optical members each other through the pressure-sensitive adhesive sheet of the invention, (2) an embodiment of adhering an optical member to a member other than an optical member through the pressure-sensitive adhesive sheet of the invention, or (3) an embodiment of adhering the pressure-sensitive adhesive sheet of the invention containing an optical member to an optical member or a member other than an optical member. In the case of the embodiments (1) or (2), the pressure-sensitive adhesive sheet of the invention is preferably a double-sided pressure-sensitive adhesive sheet. In the case of the embodiment (3), the pressure-sensitive adhesive sheet of the invention is preferably used even in either form of a single-sided pressure-sensitive adhesive sheet and a double-sided pressure-sensitive adhesive sheet. In the above-mentioned embodiment (3), the pressure-sensitive adhesive sheet of the invention is preferably a pressure-sensitive adhesive sheet in which the substrate is an optical member (an optical film including a polarizing film).

FIG. 1 shows one embodiment (schematic cross-sectional view) of a resistance film-mode touch panel formed by adhering members with the pressure-sensitive adhesive sheet of the invention. In the touch panel shown in FIG. 1, two sheets of a transparent conductive polyethylene terephthalate (PET) film 3 in which a transparent conductive film (conductive layer) by Indium Tin Oxide (ITO) is formed on the surface are disposed, with sandwiching a conductive layer 4 therebetween, in the form of opposing the conductive layer-formed surfaces each other (opposite disposition). Furthermore, a PET film 1 on which a frame print is applied (a PET film on which a designed print is applied: a frame print 1b is applied on a PET film 1a) is adhered to one outer side of the oppositely disposed transparent conductive PET films through the pressure-sensitive adhesive sheet 2a of the invention. Moreover, a polycarbonate plate 5 (reinforcing plate) is adhered to another outer side of the oppositely disposed transparent conductive PET films through the pressure-sensitive adhesive sheet 2b of the invention.

The pressure-sensitive adhesive sheet of the invention has an excellent thickness unevenness absorbability. Therefore, particularly at the time of adhering a member having thickness unevenness on the surface as the above-mentioned PET film on which a frame print is applied, the sheet can play a role of fixing the member and also a role of recovering the thickness unevenness of the member to improve appearance after adhesion, so that the sheet is preferred. The height of the thickness unevenness applied on the member is not particularly limited but is preferably 25 $\mu$m or less. Moreover, from the viewpoint of the effect of thin film formation and recovery of the thickness unevenness, the ratio of

thickness of the acrylic pressure-sensitive adhesive layer to the height of the thickness unevenness (thickness of acrylic pressure-sensitive adhesive layer/height of thickness unevenness) is preferably 2 to 5, more preferably 3 to 4.

In addition to the above-mentioned resistance film-mode touch panel, in an electric capacitance-mode touch panel, for example, the pressure-sensitive adhesive sheet of the invention can be used at the time of adhering a polymethyl methacrylate (PMMA) plate onto the surface of a transparent conductive PET film on which a silver paste electrode (height of about 8 to 10 μm) has been provided. In this case, for the purpose of no corrosion of the electrode, it is preferred to use a pressure-sensitive adhesive sheet excellent in corrosion resistance having an acrylic pressure-sensitive adhesive layer formed from a pressure-sensitive adhesive composition containing an acrylic polymer composed of monomer components containing substantially no carboxyl group-containing monomer.

## Examples

The present invention will be explained below in more detail with reference to Examples, but the invention is not limited to these Examples. Incidentally, table 1 shows monomer composition and weight-average molecular weight of the acrylic polymers and acrylic oligomers used in Examples and Comparative Examples. Moreover, Table 2 shows mixing composition of the acrylic polymers, acrylic oligomers, croslinking agents, and crosslinking accelerators and thickness of the acrylic pressure-sensitive adhesive layers (thickness of pressure-sensitive adhesive layers).

### Preparation Examples of Acrylic Polymers

(Acrylic Polymer A)

Into a separable flask, 40 parts by weight of 2-ethylhexyl acrylate (2EHA), 59 parts by weight of 2-methoxyethyl acrylate (2MEA), 1 part by weight of 4-hydroxybutyl acrylate (4HBA) as monomer components, 0.2 part by weight of 2,2'-azobisisobutyronitrile as a polymerization initiator, and 100 parts by weight of ethyl acetate as a polymerization solvent were charged. The contents were stirred for 1 hour while introducing nitrogen gas into the flask. After the oxygen present in the polymerization system was removed as above, the mixture was heated to 63°C and reacted for 10 hours to obtain an acrylic polymer solution having a concentration of a solid content of 25% by weight (sometimes referred to as "acrylic polymer solution A"). The acrylic polymer (sometimes referred to as "acrylic polymer A") in the acrylic polymer solution A had a weight-average molecular weight of 1,000,000.

(Acrylic Polymer B to H)

Acrylic polymer solutions (sometimes referred to as "acrylic polymer solutions B to H") were obtained in the same manner as above with changing the kinds, mixing amounts, and the like of the monomer components as shown in Table 1. Weight-average molecular weight of the acrylic polymers (sometimes referred to as "acrylic polymers B to H") in the acrylic polymer solutions B to H was shown in Table 1.

### Preparation Examples of Acrylic Oligomers

(Acrylic Oligomer a)

Into a separable flask, 94 parts by weight of cyclohexyl methacrylate (CHMA) (glass transition temperature of the homopolymer (polycyclohexyl methacrylate): 66°C), 6 parts by weight of acrylic acid, as monomer components, 3 parts by weight of 2-mercaptoethanol as a chain transfer agent, 0.2 parts by weight of 2,2'-azobisisobutyronitrile as a polymerization initiator, and 120 parts by weight of toluene as a polymerization solvent were charged. The contents were stirred for 1 hour while introducing nitrogen gas into the flask. After the oxygen present in the polymerization system was removed as above, the mixture was heated to 70°C and reacted for 3 hours and was then further reacted at 75°C for 2 hours to obtain an acrylic oligomer solution having a concentration of a solid content of 50% by weight (sometimes referred to as "acrylic oligomer solution a"). The acrylic oligomer (sometimes referred to as "acrylic oligomer a") in the acrylic oligomer solution a had a weight-average molecular weight of 4,200.

(Acrylic Oligomer b)

An acrylic oligomer solution (sometimes referred to as "acrylic oligomer solution b") was obtained in the same manner as above with changing the kinds and mixing amounts of the monomer components as shown in Table 1 and changing the mixing amount of the chain transfer agent to 0.3 part by weight. The acrylic oligomer (sometimes referred to as "acrylic oligomer b") in the acrylic oligomer solution b had a weight-average molecular weight of 45,000.

Table 1

| | | Monomer Composition | | | Weight-Average Molecular Weight of Polymer or Oligomer |
|---|---|---|---|---|---|
| Acrylic Polymer A | Monomer Species | 2EHA | 2MEA | 4HBA | 1,000,000 |
| | Mixing amount (part by weight) | 40 | 59 | 1 | |
| Acrylic Polymer B | Monomer Species | 2EHA | 2MEA | 4HBA | 800,000 |
| | Mixing amount (part by weight) | 40 | 59 | 1 | |
| Acrylic Polymer C | Monomer Species | 2EHA | 2MEA | 4HBA | 1,000,000 |
| | Mixing amount (part by weight) | 59 | 40 | 1 | |
| Acrylic Polymer D | Monomer Species | 2EHA | 2MEA | 4HBA | 1,000,000 |
| | Mixing amount (part by weight) | 79 | 20 | 1 | |
| Acrylic Polymer E | Monomer Species | 2EHA | AA | - | 1,000,000 |
| | Mixing amount (part by weight) | 98 | 2 | | |
| Acrylic Polymer F | Monomer Species | BA | AA | - | 600,000 |
| | Mixing amount (part by weight) | 95 | 5 | | |
| Acrylic Polymer G | Monomer Species | iOA | iBXA | AA | 1,000,000 |
| | Mixing amount (part by weight) | 91 | 8 | 1 | |
| Acrylic Polymer H | Monomer Species | BA | EA | AA | 1,000,000 |
| | Mixing amount (part by weight) | 75 | 20 | 5 | |
| Acrylic Oligomer a | Monomer Species | CHMA | AA | - | 4,200 |
| | Mixing amount (part by weight) | 94 | 6 | - | |

(continued)

| | | Monomer Composition | | | Weight-Average Molecular Weight of Polymer or Oligomer |
|---|---|---|---|---|---|
| Acrylic Oligomer b | Monomer Species | MMA | DMAEMA | - | 45,000 |
| | Mixing amount by weight) | 95 | 5 | - | |

* The mixing amount in the table is an amount to be charged (part by weight) at production of the polymer or oligomer. Moreover, the symbols in the table are as follows.
2MEA : 2-methoxyethyl acrylate
4HBA : 4-hydroxybutyl acrylate
2EHA : 2-ethylhexyl acrylate
AA : acrylic acid
BA : n-butyl acrylate
iOA : isooctyl acrylate
iBXA : isobornyl acrylate
EA: ethyl acrylate
CHMA : cyclohexyl methacrylate
MMA : methyl methacrylate
DMAEMA : dimethylaminoethyl methacrylate

Example 1

0.7 parts by weight (on solid basis) of a polyfunctional isocyanate compound (product name "Coronate HL" manufactured by Nippon Polyurethane Industry Co., Ltd.) as a crosslinking agent was added to the acrylic polymer solution A (per 100 parts by weight of the acrylic polymer A) and then 0.1 part by weight of a product name "EDP-300" (a polyol obtained by incorporation of propylene oxide to ethylenediamine) manufactured by ADEKA Corporation as a crosslinking accelerator was added thereto to prepare an acrylic pressure-sensitive adhesive composition (solution).

The solution obtained in the above was applied to the releasant-treated surface of a polyethylene terephthalate (PET) film (thickness: 38 μm) whose surface had been subjected to a releasant treatment, according to a cast coating so as to give a dry thickness of about 25 μm. The coating was dried with heating at 130°C for 3 minutes, and was aged at 50°C for 72 hours to thereby produce a pressure-sensitive adhesive sheet (substrate-less double-sided pressure-sensitive adhesive sheet, thickness of acrylic pressure-sensitive adhesive layer: 25 μm).

Examples 2 to 4 and Comparative Examples 1 to 4

As shown in Table 2, the same procedure as in Example 1 was conducted to prepare acrylic pressure-sensitive adhesive compositions and pressure-sensitive adhesive sheets with changing the kinds of acrylic polymers and acrylic oligomers, kinds and mixing amounts of crosslinking agents, and mixing amount of crosslinking accelerator and with adding an acrylic oligomer (acrylic oligomer solution) in Comparative Examples 2 and 4.

Incidentally, the mixing amount of Coronate HL was shown by a mixing amount (part by weight) of Coronate HL on solid basis per 100 parts by weight of an acrylic polymer. Moreover, the mixing amount of Tetrad C or EDP-300 was shown by a mixing amount (part by weight) of Tetrad C or EDP-300 itself (product itself) per 100 parts by weight of an acrylic polymer. Furthermore, the mixing amount of the acrylic oligomer was shown by a mixing amount (part by weight) of the acrylic oligomer, i.e., a mixing amount (part by weight) of the acrylic oligomer solution on solid basis, per 100 parts by weight of an acrylic polymer.

Evaluation

Each of the pressure-sensitive adhesive sheets (acrylic pressure-sensitive adhesive layers) obtained in Examples and Comparative Examples was evaluated for storage modulus (23°C, 80°C), a peeling pressure-sensitive adhesive force (vs PET, 80°C, 180° peeling), a peeling pressure-sensitive adhesive force (vs PC, 80°C, 180° peeling), a gel fraction, thickness unevenness absorbability, durability, and a foaming/peeling preventive property. The evaluation results are shown in Table 2.

The measuring methods and evaluation methods are as follows. Incidentally, the measuring method of the gel fraction is as mentioned above.

(1) Storage modulus

Each of the pressure-sensitive adhesive sheets (acrylic pressure-sensitive adhesive layers) obtained in Examples and Comparative Examples was laminated to produce a laminate of the acrylic pressure-sensitive adhesive layer having a thickness of about 1.5 mm, which was used as a measuring sample.

The measuring sample was measured under conditions of a frequency of 1 Hz in the range of -70 to 200°C at a temperature-elevating rate of 5°C/minute using "Advanced Rheometric Expansion System (ARES)" manufactured by Rheometric Scientific Company and storage modulus was calculated. The storage modulus at a temperature of 23°C was shown as "storage modulus (23°C)" and the storage modulus at a temperature of 80°C was shown as "storage modulus (80°C)".

(2) Peeling pressure-sensitive adhesive force

Each of the pressure-sensitive adhesive sheets obtained in Examples and Comparative Examples was cut into a sheet piece having a width of 20 mm and a length of 100 mm and a PET film ("Lumirror S-10" manufactured by Toray Industries, Inc.) having a thickness of 25 μm was adhered (backed) onto one pressure-sensitive adhesive surface (opposite to the measuring surface) to produce a strip sheet piece.

Then, a release liner was peeled from the strip sheet piece and another side of the pressure-sensitive adhesive surface (measuring surface) was adhered to a test plate by reciprocating a 2 kg rubber roller (width: about 50 mm) once to produce a measuring sample.

After the measuring sample was allowed to stand in an atmosphere of 80°C for 2 hours, 180° peeling test was conducted in accordance with JIS Z 0237 using a tensile tester to measure 180° peeling strength (N/20 mm) against the test plate. The measurement was conducted under an atmosphere of 80°C under conditions of a peeling angle of 180° and a drawing rate of 300 mm/minute. The number of the test was three times (average value) per each sample.

The 180° peeling strength in the case of using a PET film ("Lumirror T-50" manufactured by Toray Industries, Inc., thickness: 125 μm) was regarded as "peeling pressure-sensitive adhesive force (vs PET, 80°C, 180° peeling)".

Also, the 180° peeling strength in the case of using a polycarbonate plate ("Panlite Sheet PC1111" manufactured by Teijin Chemicals Limited, thickness of 1 mm) was regarded as "peeling pressure-sensitive adhesive force (vs PC, 80°C, 180° peeling)".

(3) Thickness unevenness absorbability

A black print having a thickness of 4 μm was applied twice by screen printing on one side of a PET film (product name "A4100" manufactured by Toyobo Co., Ltd.; thickness of 188 μm) to produce a PET film (size: a length of 60 mm × a width of 42 mm) having a frame-shaped black printed layer (printed layer thickness of 8 μm, outer size: a length of 60 mm × a width of 42 mm) as shown in FIG. 2.

Then, each of the pressure-sensitive adhesive sheets (size: a length of 60 μm × a width of 42 mm) obtained in Examples and Comparative Examples was adhered onto the surface of the above-mentioned PET film having the black printed layer at the black printed layer side by means of a laminator (line pressure: 5 kg/cm).

Furthermore, a release liner was peeled from a laminate of the PET film having the black printed layer and the pressure-sensitive adhesive sheet and the pressure-sensitive adhesive surface of the laminate was adhered onto a PET film (product name "A4300" manufactured by Toyobo Co., Ltd.; thickness of 125 μm) (size: a length of 60 mm × a width of 42 mm), which had been adhered on a glass substrate beforehand, by means of a laminator (line pressure: 5 kg/cm) to thereby produce a measuring sample (see FIG. 3).

After the measuring sample was treated under conditions of 50°C and 0.5 MPa for 15 minutes using an autoclave, bubbles and lifting at the thickness uneven part were visually observed from the glass substrate side. When neither bubbles nor lifting was observed at all at the thickness uneven part, it was evaluated as "good" in thickness unevenness absorbability, and when bubbles or lifting was observed at least slightly, it was evaluated as "poor" in thickness unevenness absorbability.

FIG. 2 is a schematic view of the PET film having the black printed layer (plan view from the black printed layer side) used for evaluation of the above-mentioned thickness unevenness absorbability. A frame-shaped black printed layer 7 is provided on a PET film 6.

FIG. 3 is a schematic view (cross-sectional view) of the measuring sample used for evaluation of the above-mentioned thickness unevenness absorbability. A pressure-sensitive adhesive sheet (acrylic pressure-sensitive adhesive layer) 8 obtained in each of Examples and Comparative Examples was adhered onto the laminate (PET film having the black printed layer) wherein the frame-shaped black printed layer 7 is provided on the PET film 6, and further a laminate of a glass substrate 10 and a PET film 9 was adhered onto the pressure-sensitive adhesive sheet 8. In FIG. 3, 11 shows a thickness uneven part.

(4) Durability

A measuring sample (see FIG. 3) was produced in the same manner as in the above-mentioned "(3) Thickness unevenness absorbability".

The measuring sample was treated under conditions of 50°C and 0.5 MPa for 15 minutes using an autoclave. Then, it was treated under conditions of 80°C for 250 hours and further treated under conditions of 60°C and 95% RH for 250 hours. Thereafter, bubbles and lifting at the thickness uneven part were visually observed from the glass substrate side. When neither bubbles nor lifting was observed at all at the thickness uneven part, it was evaluated as "good" in durability, and when bubbles or lifting was observed at least slightly, it was evaluated as "poor" in durability.

(5) Foaming/peeling preventive property

One pressure-sensitive adhesive surface of each pressure-sensitive adhesive sheet obtained in Examples and Comparative Examples was adhered to a PET film (product name "A4300" manufactured by Toyobo Co., Ltd.; thickness of 125 μm) to produce a film piece having a width of 100 mm and a length of 100 mm.

A release liner was peeled from the film piece, which was then adhered and fixed to a polycarbonate (PC) plate ("Panlite Sheet PC1111" manufactured by Teijin Chemicals Limited, thickness of 1 mm), to thereby produce a sample piece having a layer constitution composed of PET film/acrylic pressure-sensitive adhesive layer (pressure-sensitive adhesive sheet)/PC plate.

The sample piece was placed in an oven of 80°C for 5 hours to thereby conduct a heat treatment (heat resistance test). After this heat resistance test, the adhering interface of the sample piece (interface between the acrylic pressure-sensitive adhesive layer and the PC plate) was visually observed. When neither bubbles nor lifting was observed at all, it was evaluated as "good" in foaming/peeling preventive property, and when bubbles or lifting was observed at least slightly, it was evaluated as "poor" in foaming/peeling preventive property.

## Table 2

| | | | Example 1 | Example 2 | Example 3 | Example 4 |
|---|---|---|---|---|---|---|
| Acrylic Pressure-Sensitive Adhesive Composition | Acrylic Polymer | Kinds | Acrylic Polymer A | Acrylic Polymer B | Acrylic Polymer C | Acrylic Polymer D |
| | | Mixing amount (parts by weight) | 100 | 100 | 100 | 100 |
| | Acrylic Oligomer | Kinds | None | None | None | None |
| | | Mixing amount (parts by weight) | - | - | - | - |
| | Crosslinking agent | Kinds | Coronate HL | Coronate HL | Coronate HL | Coronate HL |
| | | Mixing amount (parts by weight) | 0.7 | 0.9 | 0.7 | 0.7 |
| | Crosslinking accelerator | Kinds | EDP-300 | EDP-300 | EDP-300 | EDP-300 |
| | | Mixing amount (parts by weight) | 0.1 | 0.1 | 0.1 | 0.1 |
| Acrylic Pressure-Sensitive Adhesive Layer | Gel Fraction | (%) | 55 | 57 | 57 | 57 |
| | Thickness of Pressure-Sensitive Adhesive Layer | (μm) | 25 | 25 | 25 | 25 |
| | Storage modulus of Elasticity (23°C) | ($\times 10^4$ Pa) | 6 | 9.8 | 9 | 6 |
| | Storage modulus of Elasticity (80°C) | ($\times 10^4$ Pa) | 4 | 6 | 6 | 4 |
| | Peeling Pressure-Sensitive Adhesive Force (vs PC, 80°C, 180° Peeling) | (N/20 mm) | 4.2 | 3.0 | 3.7 | 3.2 |
| | Peeling Pressure-sensitive Adhesive Force (vs PET, 80°C, 180° Peeling) | (N/20 mm) | 4.0 | 3.1 | 3.3 | 3.1 |
| Foaming/Peeling Preventive Property | | | good | good | good | good |
| Thickness Unevenness absorbability | | | good | good | good | good |
| Durability | | | good | good | good | good |

Table 2 (Continued)

| | | | Comparative Example 1 | Comparative Example 2 | Comparative Example 3 | Comparative Example 4 |
|---|---|---|---|---|---|---|
| Acrylic Pressure-Sensitive Adhesive Composition | Acrylic Polymer | Kinds | Acrylic Polymer E | Acrylic Polymer F | Acrylic Polymer G | Acrylic Polymer H |
| | | Mixing amount (parts by weight) | 100 | 100 | 100 | 100 |
| | Acrylic Oligomer | Kinds | None | Acrylic Oligomer a | None | Acrylic Oligomer b |
| | | Mixing amount (parts by weight) | - | 25 | - | 10 |
| | Crosslinking agent | Kinds | Coronate HL | Tetrad C | Coronate HL | Tetrad C |
| | | Mixing amount (parts by weight) | 0.7 | 0.07 | 0.7 | 0.045 |
| | Crosslinking accelerator | Kinds | EDP-300 | None | None | None |
| | | Mixing amount (parts by weight) | 0.1 | - | - | - |
| Acrylic Pressure-Sensitive Adhesive Layer | Gel Fraction | (%) | 60 | 60 | 61 | 62 |
| | Thickness of Pressure-Sensitive Adhesive Layer | (μm) | 25 | 25 | 25 | 25 |
| | Storage modulus of Elasticity (23°C) | ($\times 10^4$ Pa) | 7 | 23 | 7 | 26 |
| | Storage modulus of Elasticity (80°C) | ($\times 10^4$ Pa) | 4 | 5 | 3 | 7 |
| | Peeling Pressure-Sensitive Adhesive Force (vs PC, 80°C, 180° Peeling) | (N/20 mm) | 0.4 | 11.8 | 2.2 | 14.3 |
| | Peeling Pressure-sensitive Adhesive Force (vs PET, 80°C, 180° Peeling) | (N/20 mm) | 0.3 | 7.2 | 2.3 | 16.6 |
| Foaming/Peeling Preventive Property | | | poor (Foaming) | good | poor (Foaming) | good |
| Thickness Unevenness absorbability | | | good | poor (Lifting) | good | poor (Lifting) |
| Durability | | | poor (Lifting) | poor (Lifting) | poor (Lifting) | poor (Lifting) |

Coronate HL: product name "Coronate HL" (aliphatic isocyanate crosslinking agent) manufactured by Nippon Polyurethane Industry Co., Ltd.

Tetrad C: product name "Tetrad C" (epoxy crosslinking agent) manufactured by Mitsubishi Gas Chemical Company, Inc.

EDP-300: product name "EDP-300" manufactured by ADEKA Corporation

As apparent from the results in Table 2, the pressure-sensitive adhesive sheets satisfying the requirements of the invention (Examples) were excellent in thickness unevenness absorbability and durability, despite that they were thin films. Moreover, the sheets were also excellent in foaming/peeling preventive property in the case of adhesion to a polycarbonate plate.

On the other hand, in the case where the storage modulus (23°C) was too high (Comparative Examples 2 and 4), the thickness unevenness absorbability was poor. In the case where the peeling pressure-sensitive adhesive force (vs PET, 80°C, 180° peeling) was low (Comparative Examples 1 and 3), the durability was poor.

## Claims

1. A pressure-sensitive adhesive sheet for optical member adhesion, which comprises at least an acrylic pressure-sensitive adhesive layer formed from a pressure-sensitive adhesive composition containing an acrylic polymer and a crosslinking agent, wherein

   - the acrylic polymer comprises an alkoxyalkyl acrylate (component A) and an acrylic monomer having a crosslinkable functional group (component B) as essential monomer components and has a weight-average molecular weight determined according to the method described in the description of 400,000 to 1,600,000
   - the content of the component A is 20 to 99.5% by weight and the content of the component B is 0.5 to 3.0% by weight per total monomer components (100% by weight) constituting the acrylic polymer,
   - the content of carboxyl group-containing monomers in the monomer components constituting the acrylic polymer is less than 0.05% by weight, and
   - the pressure-sensitive adhesive composition contains 0.01 to 3.0 parts by weight of an aliphatic isocyanate crosslinking agent as the crosslinking agent and further contains 0.01 to 5.0 parts by weight of an amine compound having at least two hydroxyl groups in the molecule, per 100 parts by weight of the acrylic polymer,

   with the proviso that the content of the component A is not 45 to 99.5% by weight per total monomer components constituting the acrylic polymer.

2. The pressure-sensitive adhesive sheet of claim 1, wherein the acrylic pressure-sensitive adhesive layer has a storage modulus at 23°C determined according to the method described in the description of from $1.0 \times 10^4$ Pa to less than $1.0 \times 10^5$ Pa and has a peeling pressure-sensitive adhesive force determined according to the method described in the description (with respect to polyethylene terephthalate, 180° peeling) at 80°C of 2.5 N/20 mm or more.

3. The pressure-sensitive adhesive sheet of claim 1 or 2, wherein the component B is an acrylic monomer having a hydroxyl group.

4. The pressure-sensitive adhesive sheet of any of claims 1 to 3, which is a substrate-less double-sided pressure-sensitive adhesive sheet composed only of the acrylic pressure-sensitive adhesive layer.

5. The pressure-sensitive adhesive sheet of any of claims 1 to 3, which further comprises a transparent substrate having the acrylic pressure-sensitive adhesive layer at least on one side thereof.

6. The pressure-sensitive adhesive sheet of any of claims 1 to 5, wherein the acrylic pressure-sensitive adhesive layer has a gel fraction determined according to the method described in the description of from 40 to 80%.

## Patentansprüche

1. Haftklebefolie für die Anhaftung eines optischen Elements, welche wenigstens eine Acrylhaftklebstoffschicht umfasst, die aus einer Haftklebstoffzusammensetzung gebildet ist, die ein Acrylpolymer und ein Vernetzungsmittel enthält, wobei

   - das Acrylpolymer umfasst ein Alkoxyalkylacrylat (Komponente A) und ein Acrylmonomer mit einer vernetzbaren funktionellen Gruppe (Komponente B) als wesentliche Monomerkomponenten und hat ein gewichtsgemitteltes Molekulargewicht, bestimmt gemäß dem in der Beschreibung beschriebenen Verfahren, von 400000 bis 1600000,
   - der Gehalt der Komponente A beträgt 20 bis 99,5 Gew.-% und der Gehalt der Komponente B beträgt 0,5 bis 3,0 Gew.-%, bezogen auf die gesamten Monomerkomponenten (100 Gew.-%), die das Acrylpolymer bilden,
   - der Gehalt von eine Carboxylgruppe enthaltenden Monomeren in den Monomerkomponenten, die das Acrylpolymer bilden, beträgt weniger als 0,05 Gew.-%, und
   - die Haftklebstoffzusammensetzung enthält 0,01 bis 3,0 Gewichtsteile eines aliphatischen Isocyanat-Vernetzungsmittels als das Vernetzungsmittel und enthält außerdem 0,01 bis 5,0 Gewichtsteile einer Aminverbindung mit wenigstens zwei Hydroxylgruppen in dem Molekül, pro 100 Gewichtsteile des Acrylpolymers,

mit der Maßgabe, dass der Gehalt der Komponente A nicht 45 bis 99,5 Gew.-%, bezogen auf die gesamten Monomerkomponenten, die das Acrylpolymer bilden, beträgt.

**2.** Haftklebefolie nach Anspruch 1, wobei die Acrylhaftklebstoffschicht einen Speichermodul bei 23 °C, bestimmt gemäß dem in der Beschreibung beschriebenen Verfahren, von 1,0 x $10^4$ Pa bis weniger als 1,0 x $10^5$ Pa aufweist und eine Schälkraft des Haftklebstoffs, bestimmt gemäß dem in der Beschreibung beschriebenen Verfahren, (bezogen auf Polyethylenterephthalat, 180°-Schälung) bei 80 °C von 2,5 N/20 mm oder mehr aufweist.

**3.** Haftklebefolie nach Anspruch 1 oder 2, wobei die Komponente B ein Acrylmonomer mit einer Hydroxylgruppe ist.

**4.** Haftklebefolie nach einem der Ansprüche 1 bis 3, welche eine substratfreie doppelseitige Haftklebefolie ist, die nur aus der Acrylhaftklebstoffschicht zusammengesetzt ist.

**5.** Haftklebefolie nach einem der Ansprüche 1 bis 3, welche außerdem ein transparentes Substrat mit der Acrylhaftklebstoffschicht wenigstens auf einer Seite davon umfasst.

**6.** Haftklebefolie nach einem der Ansprüche 1 bis 5, wobei die Acrylhaftklebstoffschicht eine Gelfraktion, bestimmt gemäß dem in der Beschreibung beschriebenen Verfahren, von 40 bis 80 % aufweist.

**Revendications**

**1.** Feuille adhésive sensible à la pression pour l'adhésion d'un élément optique, qui comprend au moins une couche adhésive acrylique sensible à la pression formée à partir d'une composition adhésive sensible à la pression contenant un polymère acrylique et un agent de réticulation, dans laquelle

- le polymère acrylique comprend un acrylate d'alkoxy alkyle (composant A) et un monomère acrylique ayant un groupe fonctionnel réticulable (composant B) comme composants monomères essentiels et a un poids moléculaire moyen en poids déterminé selon le procédé décrit dans la description de 400 000 à 1 600 000,
- la teneur du composant A est de 20 à 99,5 % en poids et la teneur du composant B est de 0,5 à 3,0 % en poids pour les composants monomères totaux (100 % en poids) constituant le polymère acrylique,
- la teneur des monomères contenant le groupe carboxyle dans les composants monomères constituant le polymère acrylique est inférieure à 0,05 % en poids, et
- la composition adhésive sensible à la pression contient 0,01 à 3,0 partie(s) en poids d'un agent de réticulation isocyanate aliphatique comme agent de réticulation et contient en outre 0,01 à 5,0 partie(s) en poids d'un composant amine ayant au moins deux groupes hydroxyle dans la molécule, pour 100 parties en poids du polymère acrylique,

à condition que la teneur du composant A ne soit pas de 45 à 99,5 % en poids pour les composants monomères totaux constituant le polymère acrylique.

**2.** Feuille adhésive sensible à la pression selon la revendication 1, dans laquelle la couche adhésive acrylique sensible à la pression a un module d'élasticité en cisaillement au stockage à 23°C déterminé selon le procédé décrit dans la description de 1,0 x $10^4$ Pa à moins de 1,0 x $10^5$ Pa et a une force de résistance au décollement de l'adhésif sensible à la pression déterminée selon le procédé décrit dans la description (relativement au téréphtalate de polyéthylène, décollement à 180°) à 80°C de 2,5 N/20 mm ou plus.

**3.** Feuille adhésive sensible à la pression selon la revendication 1 ou 2, dans laquelle le composant B est un monomère acrylique ayant un groupe hydroxyle.

**4.** Feuille adhésive sensible à la pression selon l'une quelconque des revendications 1 à 3, qui est une feuille adhésive sensible à la pression double face sans substrat composée uniquement de la couche adhésive acrylique sensible à la pression.

**5.** Feuille adhésive sensible à la pression selon l'une quelconque des revendications 1 à 3, qui comprend en outre un

substrat transparent ayant la couche adhésive acrylique sensible à la pression au moins sur l'une de ses faces.

6. Feuille adhésive sensible à la pression selon l'une quelconque des revendications 1 à 5, dans laquelle la couche adhésive acrylique sensible à la pression a une fraction de gel déterminée selon le procédé décrit dans la description de 40 à 80 %.

FIG. 1

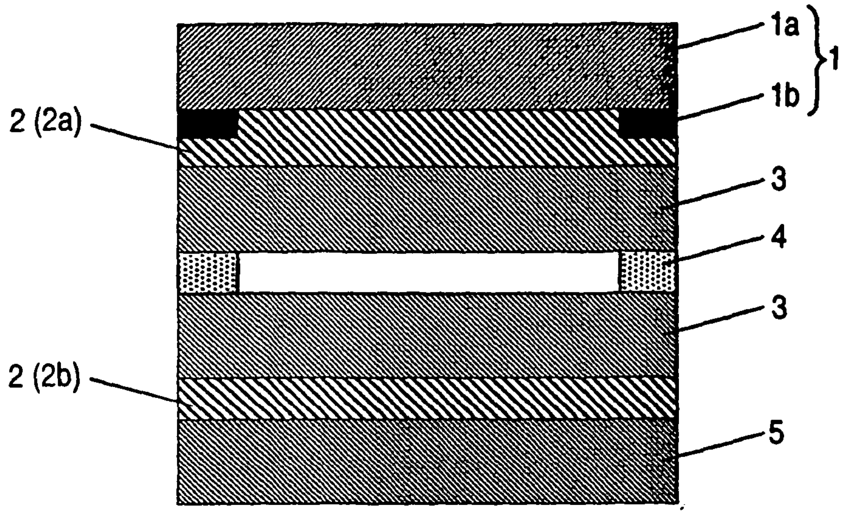


FIG. 2

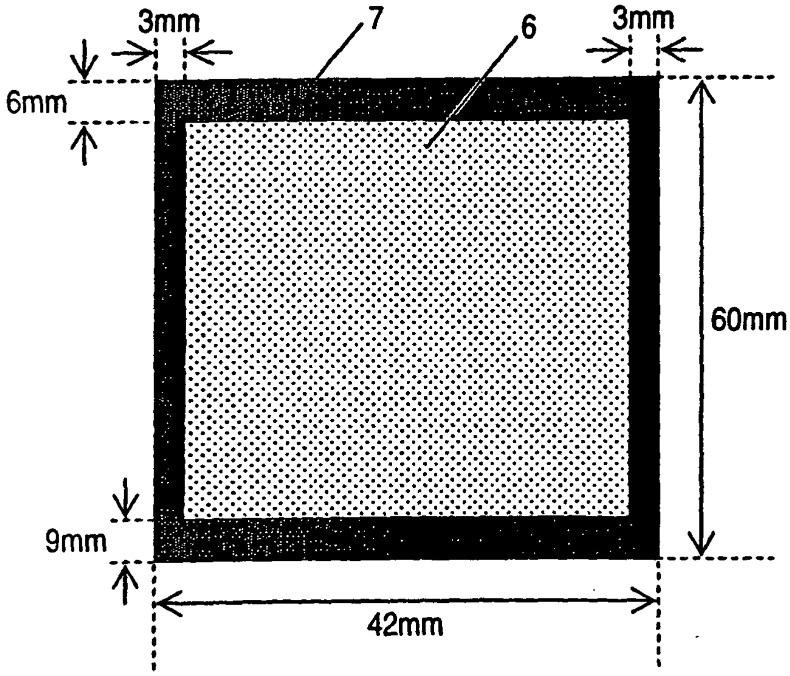


FIG. 3

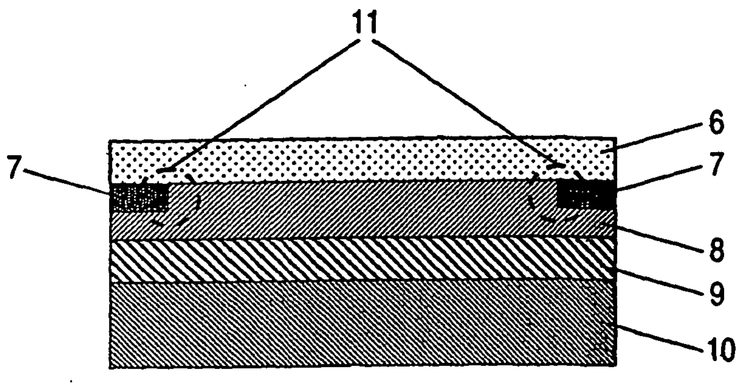

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1956064 A1
- EP 2033988 A2
- JP 2003238915 A
- JP 2003342542 A
- JP 2004231723 A